(19) Europäisches Patentamt
European Patent Office
Office européen des brevets

(11) **EP 3 723 478 B1**

## (12) EUROPEAN PATENT SPECIFICATION

(45) Date of publication and mention of the grant of the patent:
**21.08.2024 Bulletin 2024/34**

(21) Application number: **18887374.9**

(22) Date of filing: **12.12.2018**

(51) International Patent Classification (IPC):
**A01K 15/02** *(2006.01)*  **H05C 1/04** *(2006.01)*

(52) Cooperative Patent Classification (CPC):
**A01K 15/022; H05C 1/04**

(86) International application number:
**PCT/US2018/065154**

(87) International publication number:
**WO 2019/118568 (20.06.2019 Gazette 2019/25)**

(54) **METHOD AND APPARATUS FOR APPLYING, MONITORING, AND ADJUSTING A STIMULUS TO A PET**

VERFAHREN UND VORRICHTUNG ZUR ANWENDUNG, ÜBERWACHUNG UND ANPASSUNG EINES REIZES AUF EIN HAUSTIER

PROCÉDÉ ET APPAREIL POUR APPLIQUER, SURVEILLER ET AJUSTER UN STIMULUS À UN ANIMAL DE COMPAGNIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2017 US 201715839737
12.12.2017 US 201715839749**

(43) Date of publication of application:
**21.10.2020 Bulletin 2020/43**

(73) Proprietor: **Radio Systems Corporation
Knoxville, TN 37932 (US)**

(72) Inventor: **MCFARLAND, Scott
Knoxville, TN 37932 (US)**

(74) Representative: **Mewburn Ellis LLP
Aurora Building
Counterslip
Bristol BS1 6BX (GB)**

(56) References cited:
**US-A1- 2005 145 199**   **US-A1- 2007 221 138**
**US-A1- 2008 216 766**   **US-A1- 2009 112 284**
**US-A1- 2009 112 284**   **US-A1- 2014 057 232**
**US-A1- 2014 228 927**   **US-A1- 2014 228 927**
**US-A1- 2014 261 234**

**Description**

<u>RELATED APPLICATIONS</u>

This application claims priority to US Application No. 15/839,737, filed December 12, 2017, and claims priority to US Application No. 15/839,749, filed December 12, 2017.

<u>TECHNICAL FIELD</u>

The disclosure herein involves dynamic voltage modulation.

<u>BACKGROUND</u>

Pet training and containment is essential for pet owners. One of the most common humane and effective training methods is electrical stimulation of the pet animal. Short electrical pulses are used to communicate desired behaviors. Currently, there is very little variance in stimulation delivery methods. Most typical methods deliver an electrical current directly from the output of a transformer with an assumption that energy is delivered successfully.
US 2008/0216766 describes a remote receiving circuit for providing and controlling an electric stimulus applied to an animal including an electronic switch powered by a battery in series on a primary of a high-voltage transformer and whose on/off state can be modified by control pulses to create a source of alternating current to supply the primary of the transformer. The circuit further includes a first electrode and a second electrode configured to be in contact with the animal and connected to the respective ends of a secondary of the transformer, and a device for measuring the peak intensity of a stimulus current applied by the electrodes to the animal's body.

<u>SUMMARY OF THE INVENTION</u>

The present invention provides a device as set out in claim 1, and a method to be performed on the device, as set out in claim 4. Further embodiments are defined in the in dependent claims.

<u>BRIEF DESCRIPTION OF THE DRAWINGS</u>

Figure 1 shows a circuit for developing, applying, and monitoring stimulus levels in controlling delivery of electrical stimulation to an animal, under an embodiment.

Figure 2 shows a circuit for developing, applying, and monitoring stimulus levels in controlling delivery of electrical stimulation to an animal, under an embodiment.

Figure 3 shows a circuit for developing, applying, and monitoring stimulus levels in controlling delivery of electrical stimulation to an animal, under an embodiment.

Figure 4 shows a method for modulating delivery of electrical stimulus to an animal, under an embodiment.

Figure 5 shows an oscilloscope trace of a high voltage electrode and a return electrode, under an embodiment.

Figure 6 shows a single electrical pulse followed by energy recovery, under an embodiment.

Figure 7 shows a single electrical pulse followed by energy recovery, under an embodiment.

Figure 8 shows a single electrical pulse followed by energy recovery, under an embodiment.

Figure 9 shows adjusted pulses applied at a lower voltage level while still delivering a sufficient energy level, under an embodiment.

Figure 10 shows a circuit for measuring intensity of an electrical stimulation, under an embodiment.

Figure 11A shows a one shot timer with interrupt for desired pulse width, under an embodiment.

Figure 11B shows primary current as a function of time, under an embodiment.

Figure 11C shows secondary current as a function of time, under an embodiment.

Figure 11D shows sampled voltage measurements, under an embodiment.

DETAILED DESCRIPTION

Systems and methods for delivering electrical stimulation to an animal suffer an inability to deliver precise and accurate voltage levels, an inability to precisely adjust these levels, and lack of methods to reliably determine whether a charge is effectively delivered to the pet. This problem leads to under- or over-correction of the pet which may the lead to increased stress levels during the training process and therefore decreased effectiveness.

Systems and methods are herein proposed in this application that precisely deliver electrical pulses to the pet through electrodes and that are able to determine delivery effectiveness of these pulses in a measureable manner. Based on the measured delivery effectiveness of pulses, subsequent pulses may be adjusted to increase the chances of delivery effectiveness if it is determined that successful delivery has not yet occurred. Subsequent pulses may be adjusted to minimize pulse magnitudes to decrease stress to the pet while still maintaining effectiveness if it is determined that successful delivery has occurred.

The systems and methods proposed herein implement two capabilities:
An electrical stimulus pulse development of an embodiment uses a method to precisely control the voltage and timing of energy pulses that are delivered to the pet.

Load resistance may be accurately determined under an embodiment. Load resistance is an indicator of skin conduction, which is an indicator of pulse delivery effectiveness. Identifying the point in time when skin breakdown occurs allows for a reduction in voltage level on subsequent pulses while still eliciting a similar response. Identifying the fact that the skin is not breaking down due to stimulus pulses indicates a need to increase the voltage to maximize the chance of breakdown and conduction.

In addition to the voltage adjustment and effectiveness monitoring, the use of this new technology allows for a much smaller design. As the transformer is used in step-up mode to incrementally build up a charge within storage components until such time as a return path switch is activated, the size can be much smaller than with typical techniques as it is not required to deliver a charge from a single cycle of its magnetic potential. It may take several hundred, or even several thousand cycles of charge from the transformer to build up energy in the storage components before the energy is released. The fact that the system requires an extended period of time to restore the depleted energy means there is time to monitor and control the precise voltage and also determine effectiveness of the prior pulse due to the amount of energy required to refill the storage components.

The systems and methods described herein include a method used to develop, apply (release), analyze, and adjust electrical stimulus pulses based on the load conditions of the pet skin. The electrical stimulus approach utilizes a microprocessor to control all aspects of stimulus development, release, and monitoring. The microprocessor controls a switched mode power supply, consisting of transformer and voltage doubler(s) to step-up the input voltage. The voltage is presented to storage component(s) (typically capacitors) for storage which is exposed on an electrode. This stored charge is monitored by the processor via a feedback loop. Once the processor determines a threshold voltage level is reached and any additional desired delay time is added, a high voltage switch (i.e., transistor) is switched on by the processor for the desired stimulus pulse length to complete a return path on a second electrode providing a path for current to flow from one electrode, through the pet's skin, into the second electrode, and to system return.

It is also plausible that a switch be utilized on the high voltage side of the circuit to provide a path from the storage component to the electrode (high-side switch).

The feedback loop allows for real time monitoring of voltage level and charge time. This knowledge allows a processing unit to: (i) precisely and accurately determine the stimulus pulse magnitude and (ii) monitor the recharge time. The feedback loop therefore allows determination of the depleted charge using recharge time as a direct indicator of load resistance (skin resistance). Based on depleted charge findings, subsequent pulses may be:

increased to compensate for non-optimal dermal contact;
reduced to decrease stress on the pet, while maintaining training effectiveness; and/or
reduced to save energy as lower voltage pulses require less energy to be depleted from the system power supply.

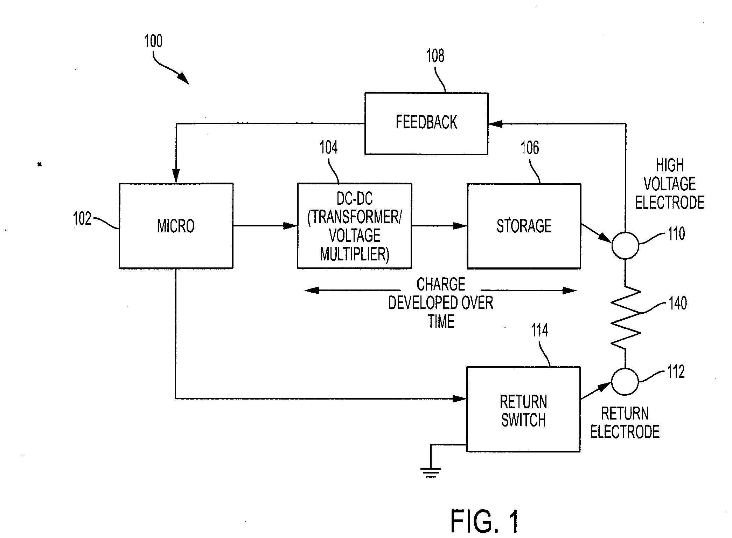

Figure 1 shows a circuit 100 for monitoring stimulus levels in controlling delivery of precise electrical stimulation to an animal. Figure 1 shows a microcontroller 102 which controls a DC-DC converter (i.e. transformer plus voltage multiplier) 104 which steps up the input voltage. The stepped-up voltage is then presented to a storage component (typically capacitor(s)) 106 for storage. The storage component may include one or more capacitors which are connected to a first (high voltage) electrode 110. The circuit shown in Figure 1 shows a feedback connection 108 between the first electrode and the microcontroller 102 such that the microcontroller may monitor potential energy at the first electrode. The microcontroller also controls a return switch 114. The microcontroller may then use the return switch 114 to provide a return path to voltage stored in the storage component after passing through the pet skin. The switch may comprise a transistor and may provide the return path for the desired stimulus pulse length. Stimulus delivery then comprises current flow from the first electrode 110 through the pet's skin (i.e. resistive load 140), into the second return electrode 112, and to system return (ground).

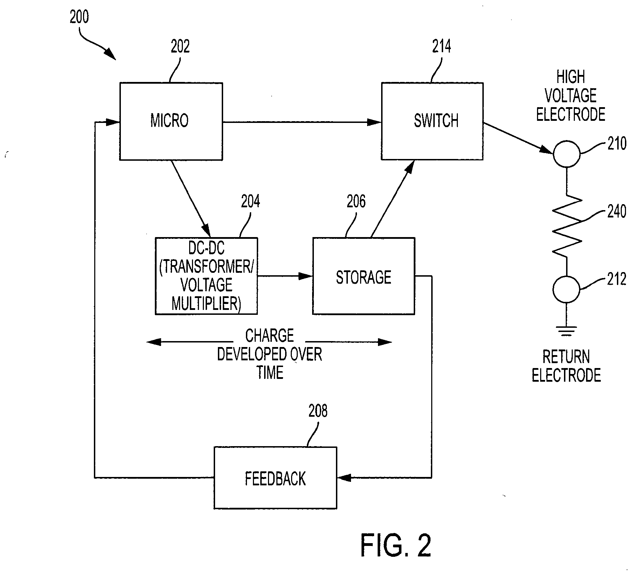

Figure 2 shows the same components of the circuit described above. However, the circuit 200 of Figure 2 places the transistor switch 214 directly between the microcontroller 202 and the first electrode 210. The DC-DC converter 204 steps up voltage delivered by the microcontroller and charges the storage 206 component. A feedback connection 208 is provided between the storage component 206 and the microcontroller 202. The microcontroller 202 controls a transistor 214 in providing a pathway between the storage component 206 (charged by the DC-DC converter 204) and the first electrode 210 for a desired stimulus pulse length. During stimulus delivery, current flows from the storage component to the first electrode 210 through the pet's skin (or resistive load 240), into the second return electrode 212, and to system return (ground). In contrast to the circuit of Figure 1, the return electrode 212, in contact with the animal skin, is always connected to system return (ground).

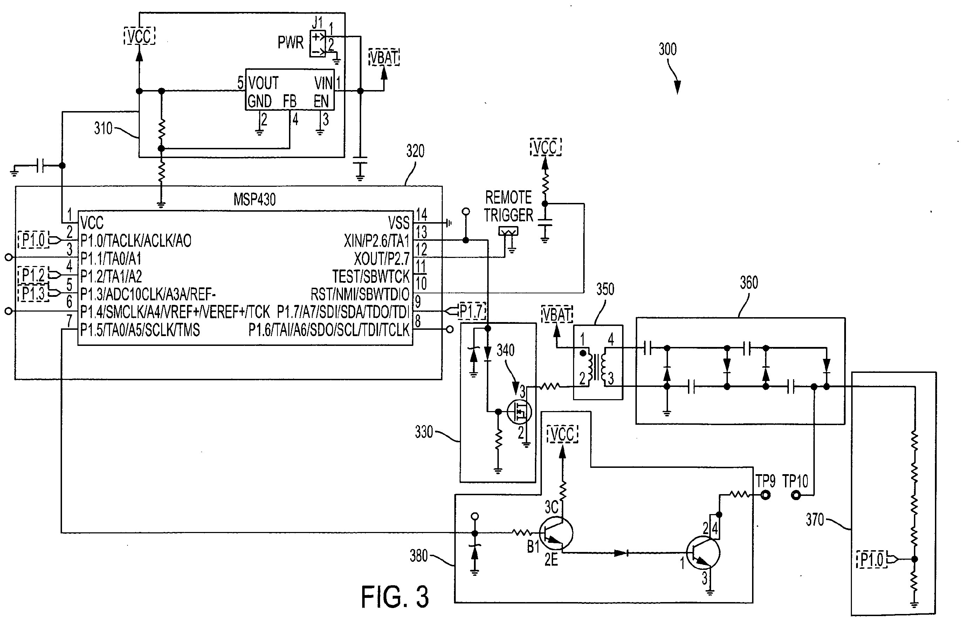

Figure 3 shows a circuit 300 for developing, applying and monitoring stimulus levels in controlling delivery of electrical stimulation to an animal, under an embodiment. Figure 3 shows voltage regulator 310 and microprocessor 320. Figure 3 shows the transformer-primary control 330. The Field-Effect Transistor (FET) 340 acts as a switch at a frequency and duty cycle to efficiently allow current to flow through the primary of the step-up transformer 350. Element 360 of Figure 3 demonstrates two stages of voltage doublers, which creates a voltage quadrupler, under an embodiment. As many stages as required may be cascaded for the specific application (in combination with the turns ratio of the step-up transformer). Accordingly, the step-up transformer 350 and voltage quadrupler 360 component comprise a DC-DC Step-up converter. Voltage divider 370 reduces the high voltage output to a level compatible with the microprocessor inputs. Figure 3 shows a controllable high voltage return path 380. This return path controls the duration of the stimulation pulse by providing a path from the high voltage electrode, through the skin, into the low side electrode, and to system ground.

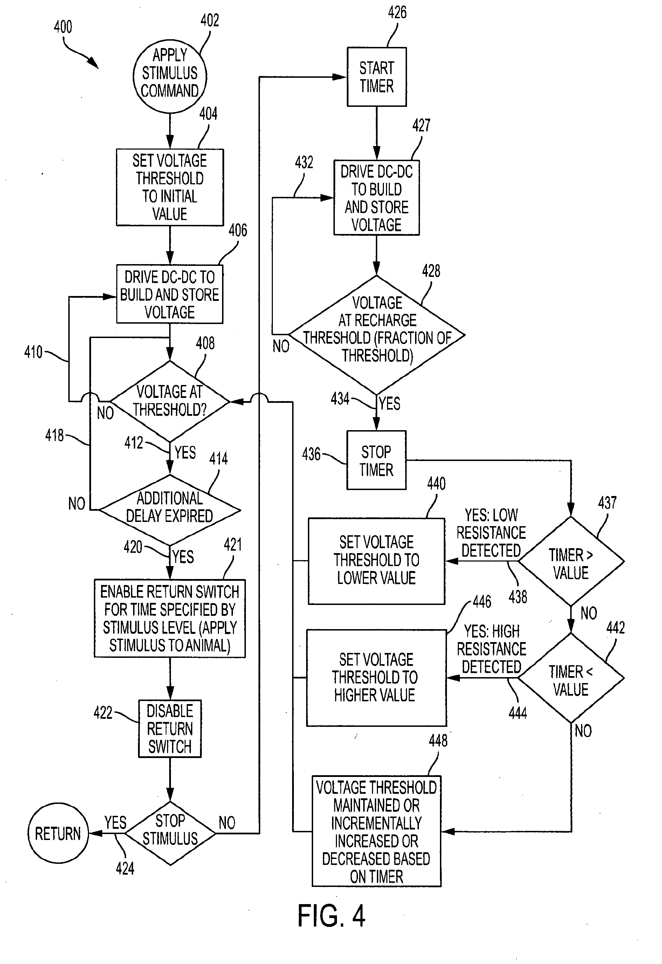

Figure 4 shows a method for modulating stimulus delivery to an animal. A first step 402 involves applying a stimulus command, i.e. a command to deliver an electrical stimulus using the feedback control circuit described herein. Step 404 comprises setting a voltage threshold to an initial value. Step 406 involves a microcontroller controlling a DC-DC converter to provide a voltage to a storage component to drive and build voltage potential. The method iteratively checks the voltage 408 to determine if a threshold is met. If no 410 then voltage development and storage continues. If yes 412, the method proceeds to step 414 to determine if an additional delay is expired. If not 418 then the method maintains voltage at the stored potential level. If the answer is yes 420 then the microcontroller enables the return switch for a time specified or determined by a given stimulus level 421, i.e. the stimulus is applied to the animal. The microcontroller then disables the switch 422, i.e. return pathway. If application of the stimulus command is discontinued 424, then the method of stimulus delivery is also discontinued.

If application of the stimulus command continues, the method starts a timer 426. As timer 426 runs, the microcontroller controls a DC-DC converter to provide a voltage to a storage component to drive and build voltage potential 427. Step 428 determines whether the stored voltage achieves a set threshold (which may be a fraction of the originally established threshold at step 408). If not 432, charging continues. Once this threshold voltage is realized 434, the method stops the timer 436. Measured time values provide information of skin breakdown. If the measured time value is greater than a value indicating breakdown 437, then low resistance is detected 438. In this event, the voltage threshold is set to a lower value considering that skin resistance is low 440. If the measured time value is less than a value indicating minimal to no skin contact 442, then high resistance is detected 444. In this event, the voltage threshold is set to a higher value to increase the chance of a low skin resistance scenario 446. If the method passes through steps 437 and 442 as a "no" then the method at step 448 may either maintain or incrementally increase the voltage threshold based on the timer value, under an embodiment. The method at step 448 may also incrementally decrease the voltage threshold based on the timer value, under an embodiment. After any of the three voltage threshold assessment events, the method returns to step 408 of the stimulus command workflow process.

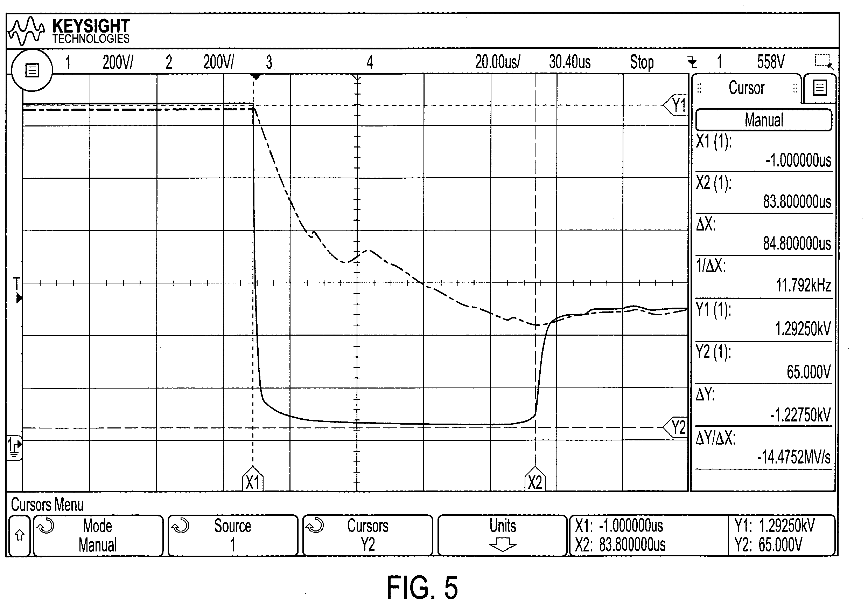

The oscilloscope trace of Figure 5 shows the high voltage electrode and return electrode during the period where the return path switch is activated. In this example, this switch is activated for a period of time about 85 microseconds. The ground electrode attains a voltage equivalent to ground almost immediately. The high voltage electrode starts at the full storage component voltage level and decreases as energy is depleted.

This voltage drop is an indicator of the energy drawn from the system's storage. The lower the pet skin resistance, the more energy is being depleted from the system. The lower the pet skin resistance, the more energy that is being delivered to the pet.

During the single electrical pulse described (and illustrated) above, energy is drawn from the system storage.

During this fixed period of time, the following equations can be applied to determine pet skin resistance, which is a direct indicator of effective pulse delivery:

E = energy in joules depleted from the storage component(s) during the stimulus pulse
P = power in watts at an instant of time
V = voltage differential across the electrodes
I = current flowing from the first electrode, through the animal, into the second electrode, to system ground.
R = resistance of the animal's skin
T = time in seconds that the pulse is applied to the animal's skin

$$P \ = \ VI \ = \ V^2/R$$

: Power at an instant of time

$$E \ = \ PT \ = \ (V^2/R) * T$$

: Energy over a period of time (more specifically, during the stimulus pulse)

$$R \ = \ (V^2 T) \ / \ E$$

: Resistance of the animal's skin

As can be seen from the preceding equations, energy and resistance have an inverse relationship. The higher the energy level depleted from the system (as determined by monitoring replenishment), the lower the resistance (of the pet's skin).

Long replenishment = more energy depleted = lower skin resistance

Shorter replenishment = less energy depleted = higher skin resistance

Following application of the single pulse above, the system replenishes the system energy as is indicated in the following diagrams (depending on skin resistance).

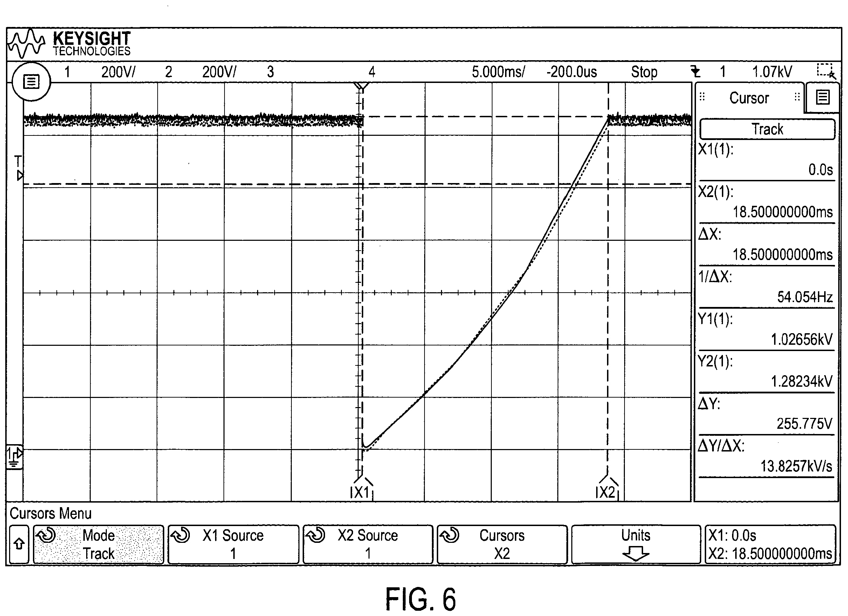

The following oscilloscope traces seen in Figures 6-9 show the high voltage electrode and return electrode before stimulus delivery, during stimulus delivery, and when restoring the energy depleted during the stimulus delivery.

The start of the gap in the traces (seen in Figures 6-9) indicates the instant a short (i.e., 1 microsecond to 200 microsecond) pulse is activated by turning on the "return switch" to enable a return path from the return electrode to ground. This period is where current is allowed to flow from the high voltage electrode, through the skin of the pet, and then to system return (ground). Following this brief period, the remainder of the gap is the period of time required to recharge the storage component(s). This period of time indicates the energy drawn from the system's storage.

Figure 6 shows a single electrical pulse followed by energy recovery assuming a 500 ohm skin resistance. A 500 ohm load indicates strong dermal contact. Figure 6 shows an 18.5ms recovery time (X1 to X2).

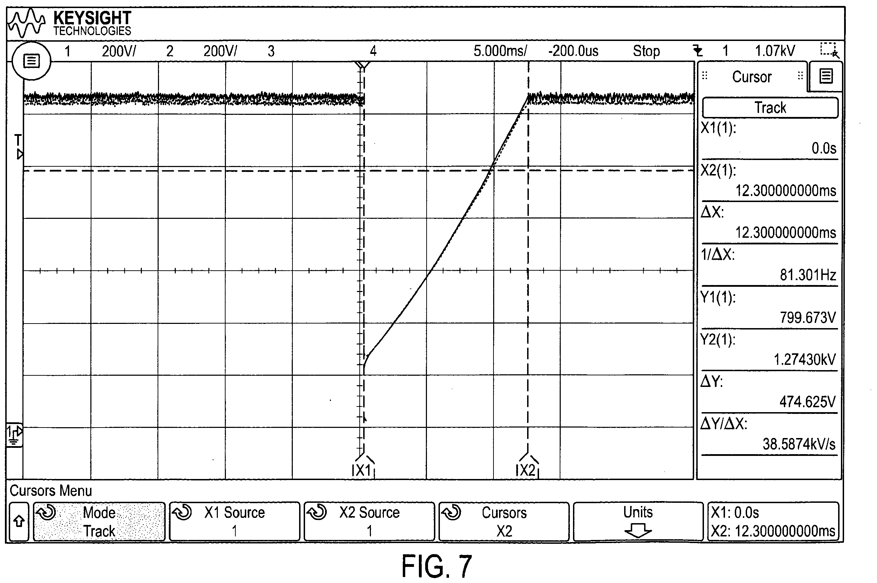

Figure 7 shows a single electrical pulse followed by energy recovery assuming a 10K ohm skin resistance. A 10K ohm load indicates weak dermal contact. Figure 7 shows a 12.3 ms recovery (X1 to X2).

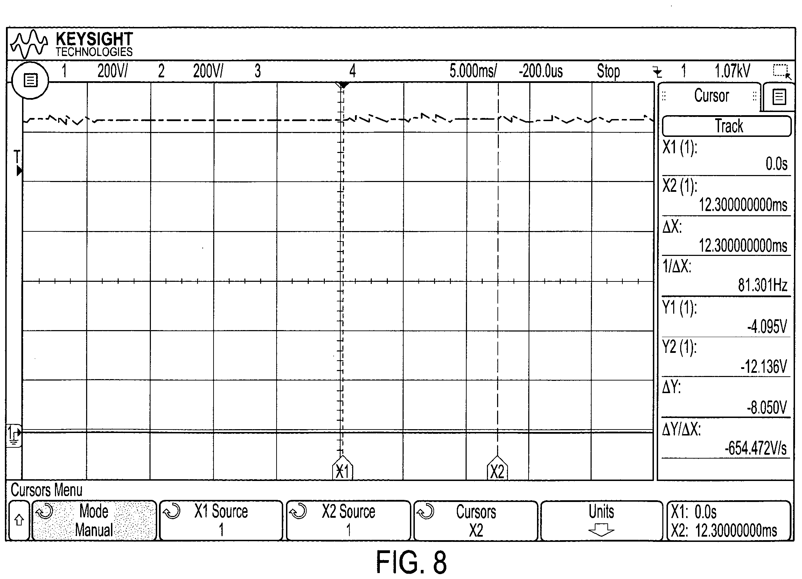

Figure 8 shows a single electrical pulse followed by energy recovery assuming minimal to no skin resistance, i.e. weak dermal contact. The very high resistive load indicates minimal to no dermal contact. Figure 8 shows an immediate recovery, indicating no energy was drained from the system during the stimulation.

If strong dermal contact is detected, subsequent pulses can be reduced in magnitude while still maintaining sufficient energy transfer. Again note that:

$$R \ = \ (V^2 * T) \ / \ E$$

$$E = (V^2 * T) / R$$

Increased energy depletion indicates that skin resistance has decreased. Therefore, voltage can be decreased while still applying a sufficient stimulus.

If R (skin resistance) decreases due to skin breakdown following a high voltage pulse, voltage (V) can be reduced to transfer equivalent energy to the initial voltage applied as can be seen in the above equations.

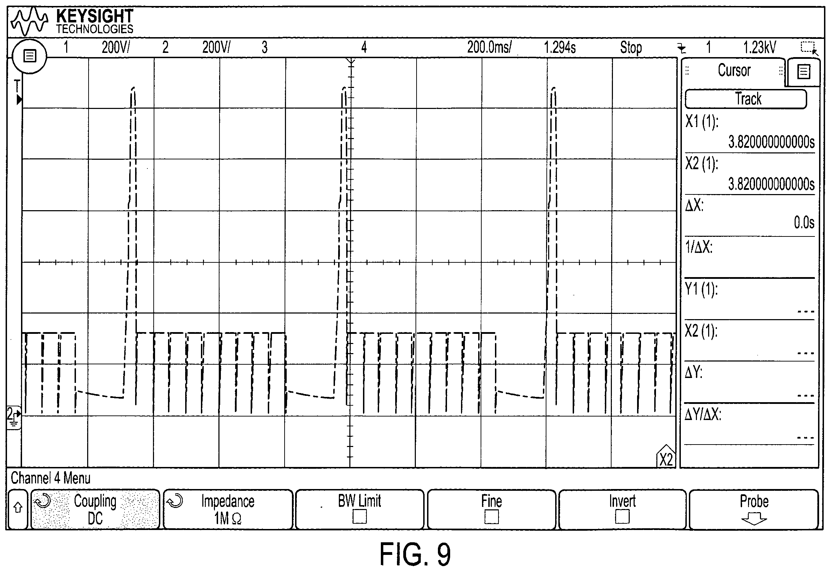

Figure 9 shows a scope trace that illustrates this particular action. The first pulse of each pulse train is applied at a high voltage level. The system determines, based on skin resistance, that skin breakdown has occurred. Therefore, the subsequent pulses are applied at a lower voltage level while still delivering an adequate energy level. The efficacy of each pulse is monitored. If any pulse is determined to be ineffective, the developed voltage can be returned to a high enough level to cause breakdown.

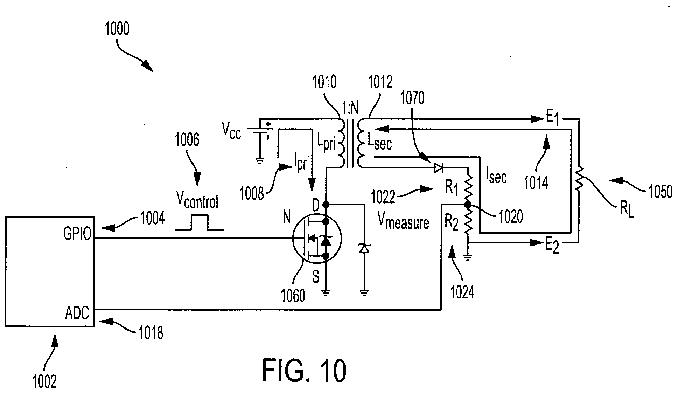

An alternative method and apparatus for measuring the intensity of electrical stimulus delivered to an animal is described below. Figure 10 shows a microcontroller 1002 driving current/voltage to circuit 1000. The circuit delivers an electrical stimulus to an animal wearing a collar housing the circuit. The circuit delivers the stimulus at resistor 1050 ($R_L$) which models the resistive load presented to the circuit (i.e., $R_L$ is a model for the skin of the animal wearing the collar).

A method of measuring the intensity of the stimulus delivered at resistor 1050 ($R_L$) is described herein. The method includes setting the general purpose input/output (GPIO) 1004 pin to high. A one shot timer with interrupt on time out is configured to maintain the high position for the desired pulse width. The one shot timer works something like an alarm clock. A timer may be set to "go on" at some point in time (i.e., at time $t_0$ = 0 under this example) and then "go off" after a certain period of time (i.e., at $t_1$ under this example). During the configured pulse width, the microcontroller 1002 provides a control voltage 1006 ($V_{control}$) which allows primary current 1008 ($I_{pri}$) to flow. (Note that the transistor 1060 functions as a switch, i.e. the transistor allows primary current 1008 ($I_{pri}$) to flow when control voltage 1006 ($V_{control}$) is applied). The primary current 1008 ($I_{pri}$) flows through primary winding 1010 ($L_{pri}$). No current flows through the secondary 1012 ($L_{sec}$) during this time due to the direction of diode 1070. Therefore, primary current results in energy being stored in the magnetic core of the transformer. The transformer comprises primary to secondary winding ratio of 1:N. Secondary current will be induced to flow as a result of a flyback phase reversal when the primary current is stopped by the removal of the control signal at transistor 1060. The secondary current 1014 ($I_{sec}$) provides a voltage drop across resistor 1050 ($R_L$), i.e. power dissipation at $R_L$ or delivery of stimulus to the animal.

In the timer interrupt service routine, the microcontroller 1002 returns the GPIO 1004 to low. Immediately following this instruction, the microcontroller 1002 triggers the analog to digital converter 1018 to sample voltage ($V_{measure}$) at location 1020 between resistor 1022 ($R_1$) and resistor 1024 ($R_2$).

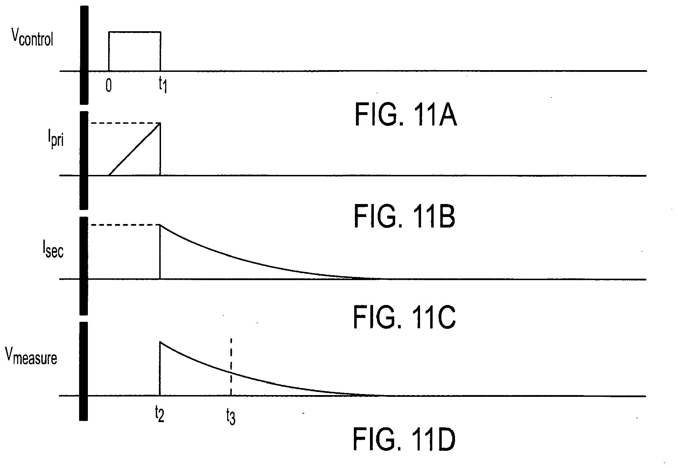

As indicated above, the microcontroller sets GPIO 1004 to high. Figure 11A shows a one shot timer with interrupt for desired pulse width $t_1$. The microcontroller shuts the GPIO 1004 off, i.e. returns it to low, at time $t_1$. The microcontroller then triggers the ADC to sample voltage ($V_{measure}$) of the circuit at location 1020 at $t_1$. It will take a small amount of time for the microcontroller and its ADC to initiate and complete the conversion, therefore the ADC sample ($V_{measure}$) occurs at a time $t_2$ which is slightly greater than $t_1$.

Figure 11B shows primary current ($I_{pri}$) as a function of time during the configured one shot pulse width. Figure 11C shows secondary current ($I_{sec}$) as a function of time after time $t_1$, i.e. after the microcontroller returns GPIO 1004 to low. When the flow of primary current ($I_{pri}$) terminates after $t_1$, note that secondary current ($I_{sec}$) experiences exponential decay to zero.

Figure 11D shows sample voltage $V_{measure}$ over time. Of course, the decay characteristics of $V_{measure}$(t) correspond to the decay characteristics of $I_{sec}$ as shown in Figure 11C. In an ADC interrupt service routine, microcontroller 1002 reads and saves an ADC measurement of voltage at location 1020 and at time $t_2$ (described previously), i.e. the ADC measures $V_{measure}(t_2)$. A one-shot timer is configured with interrupt on timeout for desired width $t_3$ - $t_2$. In a timer interrupt service routine, the microcontroller 1002 reads and saves an ADC measurement of voltage at location 1020 and at time $t_3$, i.e. the ADC measures $V_{measure}(t_3)$.

In computing intensity values, the following relationships and equations are important:

Peak Primary Current:

$$I_{pri-pk} = \frac{V_{cc}}{L_{pri}} * t_1$$

Peak Secondary Current:

$$I_{sec-pk} = I_{pri-pk}/N$$

Voltage Measurement:

$$V_{measure}(t) = R_2 * I_{sec-pk} * e^{-(t-t_1)/Tc}$$

Intensity level may be computed as follows:

$$Intensity = I_{sec}(t) * Effective\ Duration$$

$$Intensity = I_{sec-pk} * 3Tc$$

$$T_c = L_{sec}/(R_1 + R_2 + R_L)$$

The method described herein uses $V_{measure}(t_2)$, $V_{measure}(t_3)$, $t_2$, $t_3$, $R_2$, and $Tc$ to compute intensity of electrical stimulus delivered by circuit 1000.

$$(1) \quad \frac{V_{measure}(t_2)}{V_{measure}(t_3)} = \frac{R_2 * I_{sec-pk} * e^{-(t_2-t_1)/Tc}}{R_2 * I_{sec-pk} * e^{-(t_3-t_1)/Tc}}$$

$$(2) \quad \frac{V_{measure}(t_2)}{V_{measure}(t_3)} = \frac{e^{-(t_2-t_1)/Tc}}{e^{-(t_3-t_1)/Tc}}$$

$$(3) \quad \frac{V_{measure}(t_2)}{V_{measure}(t_3)} = e^{-(t_2-t_1)/Tc+(t_3-t_1)/Tc}$$

$$(4) \quad \ln\left(\frac{V_{measure}(t_2)}{V_{measure}(t_3)}\right) = -(t_2-t_1)/Tc + (t_3-t_1)/Tc$$

$$(5) \quad \ln\left(\frac{V_{measure}(t_2)}{V_{measure}(t_3)}\right) = (t_3-t_2)/Tc$$

$$(6) \quad Tc = \frac{(t_3-t_2)}{\ln\left(\frac{V_{measure}(t_2)}{V_{measure}(t_3)}\right)}$$

$$(7) \quad V_{measure}(t_2) = R_2 * I_{sec-pk} * e^{-(t_2-t_1)/Tc}$$

$$(8) \quad V_{measure}(t_2) = R_2 * I_{sec-pk}$$

$$(9) \quad I_{sec-pk} = R_2 / V_{measure}(t_2)$$

$$(10) \quad INTENSITY = I_{sec-pk} * 3Tc$$

Note the equations (6) and (9) provide values necessary to calculate Intensity using equation (10). Note also that equations (6) and (9) are based on voltage measurements ($V_{measure}(t_2)$, $V_{measure}(t_3)$), known time values ($t_2$, $t_3$), known resistor value $R_2$, and known (deduced) time constant value $Tc$. A feedback control loop may now be employed to provide a nearly constant INTENSITY for variations in Tc. Hence, the device may compensate for changes in $R_L$.

A device is described herein that comprises under one embodiment a microcontroller coupled to a transformer, wherein the transformer comprises a primary winding and a secondary winding, wherein the microcontroller is connected to a secondary circuit at a first location. The microcontroller is configured to provide a voltage at a first value to the primary winding for a first period of time, the providing the voltage for the first period of time including initiating delivery of the voltage at time $t_0$ and ceasing the delivery at time $t_1$, the ceasing the delivery inducing a flow of current through the secondary winding and the secondary circuit, wherein the secondary circuit comprises at least one resistor, at least one diode, and a resistive load, wherein the resistive load is variable. The microcontroller is configured to measure a first voltage at the first location in the secondary circuit at time $t_2$ and to measure a second voltage at the first location at time $t_3$. The microcontroller is configured to compute a time constant of the secondary circuit using a difference between time $t_3$ and time $t_2$, the first measured voltage, and the second measured voltage. The microcontroller is configured to compute a peak current in the secondary circuit using a value of the at least one resistor and the first measured voltage. The microcontroller configured to compute an intensity level at the resistive load using the computed peak current and the time constant of the secondary circuit. The microcontroller is configured to monitor the intensity level, the monitoring the intensity level including iteratively performing the providing a voltage at the first value to the primary winding for the first period of time, the measuring the first voltage and the second voltage, the computing the time constant, the computing the peak current, and the computing the intensity level.

The monitoring the intensity level of an embodiment includes maintaining the intensity level at a near constant value by iteratively adjusting at least one of the first value and the first period of time.

Computer networks suitable for use with the embodiments described herein include local area networks (LAN), wide area networks (WAN), Internet, or other connection services and network variations such as the world wide web, the public internet, a private internet, a private computer network, a public network, a mobile network, a cellular network, a value-added network, and the like. Computing devices coupled or connected to the network may be any microprocessor controlled device that permits access to the network, including terminal devices, such as personal computers, workstations, servers, mini computers, main-frame computers, laptop computers, mobile computers, palm top computers, hand held computers, mobile phones, TV set-top boxes, or combinations thereof. The computer network may include one of more LANs, WANs, Internets, and computers. The computers may serve as servers, clients, or a combination thereof.

The systems and methods for dynamic voltage modulation can be a component of a single system, multiple systems, and/or geographically separate systems. The systems and methods for dynamic voltage modulation can also be a subcomponent or subsystem of a single system, multiple systems, and/or geographically separate systems. The components of systems and methods for dynamic voltage modulation can be coupled to one or more other components (not shown) of a host system or a system coupled to the host system.

One or more components of the systems and methods for dynamic voltage modulation and/or a corresponding interface, system or application to which the systems and methods for dynamic voltage modulation is coupled or connected includes and/or runs under and/or in association with a processing system. The processing system includes any collection of processor-based devices or computing devices operating together, or components of processing systems or devices, as is known in the art. For example, the processing system can include one or more of a portable computer, portable communication device operating in a communication network, and/or a network server. The portable computer can be any of a number and/or combination of devices selected from among personal computers, personal digital assistants, portable computing devices, and portable communication devices, but is not so limited. The processing system can include components within a larger computer system.

The processing system of an embodiment includes at least one processor and at least one memory device or subsystem. The processing system can also include or be coupled to at least one database. The term "processor" as generally used herein refers to any logic processing unit, such as one or more central processing units (CPUs), digital signal processors (DSPs), application-specific integrated circuits (ASIC), etc. The processor and memory can be monolithically integrated onto a single chip, distributed among a number of chips or components, and/or provided by some combination of algorithms. The methods described herein can be implemented in one or more of software algorithm(s), programs, firmware, hardware, components, circuitry, in any combination.

The components of any system that include the systems and methods for dynamic voltage modulation can be located together or in separate locations. Communication paths couple the components and include any medium for communicating or transferring files among the components. The communication paths include wireless connections, wired connections, and hybrid wireless/wired connections. The communication paths also include couplings or connections to networks including local area networks (LANs), metropolitan area networks (MANs), wide area networks (WANs), proprietary networks, interoffice or backend networks, and the Internet. Furthermore, the communication paths include removable fixed mediums like floppy disks, hard disk drives, and CD-ROM disks, as well as flash RAM, Universal Serial Bus (USB) connections, RS-232 connections, telephone lines, buses, and electronic mail messages.

Aspects of the systems and methods for dynamic voltage modulation and corresponding systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the systems and methods for dynamic voltage modulation and corresponding systems and methods include: microcontrollers with memory (such as electronically erasable programmable read only memory (EEPROM)), embedded microprocessors, firmware, software, etc. Furthermore, aspects of the systems and methods for dynamic voltage modulation and corresponding systems and methods may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that any system, method, and/or other components disclosed herein may be described using computer aided design tools and expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, etc.). When received within a computer system via one or more computer-readable media, such data and/or instruction-based expressions of the above described components may be processed by a processing entity (e.g., one or more processors) within the computer system in conjunction with execution of one or more other computer programs.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import, when used in this application, refer to this application as a whole and not to any particular portions of this application. When the word "or" is used in reference to a list of two or more items, that word covers all of the following interpretations of the word: any of the items in the list, all of the items in the list and any combination of the items in the list.

**Claims**

1. A device (1000) comprising,

   a microcontroller (1002) coupled to a transformer, wherein the transformer comprises a primary winding (1010) and a secondary winding (1012), wherein the microcontroller is connected to a secondary circuit at a first location; wherein:

   the microcontroller is configured to provide a voltage (1006, $V_{control}$) at a first value to the primary winding for a first period of time, the providing the voltage for the first period of time including initiating delivery of the voltage at time $t_0$ and ceasing the delivery at time $t_1$, the ceasing the delivery inducing a flow of current ($I_{sec}$) through the secondary winding and the secondary circuit, wherein the secondary circuit comprises at least one resistor (1022, 1024), at least one diode (1070), and a resistive load (1050, $R_L$), wherein the resistive load is variable;
   the microcontroller is configured to measure a first voltage at the first location in the secondary circuit at time $t_2$ and to measure a second voltage at the first location at time $t_3$;
   the microcontroller is configured to compute a peak current in the secondary circuit using a value of the at least one resistor and the first measured voltage;

   characterized in that:

   the microcontroller is configured to compute a time constant of the secondary circuit using a difference

between time $t_3$ and time $t_2$. the first measured voltage, and the second measured voltage; and
the microcontroller is configured to compute an intensity level at the resistive load using the computed peak current and the time constant of the secondary circuit; and
the microcontroller is configured to monitor the intensity level, the monitoring the intensity level including iteratively performing the providing a voltage at the first value to the primary winding for the first period of time, the measuring the first voltage and the second voltage, the computing the time constant, the computing the peak current, and the computing the intensity level.

2. The device of claim 1, the monitoring the intensity level including maintaining the intensity level at a near constant value by iteratively adjusting at least one of the first value and the first period of time.

3. The device of claim 1 or 2, wherein the device is configured to apply an electrical stimulus to the skin of an animal, the skin of the animal being the resistive load.

4. A method performed on the device of any one of claims 1 to 3, the method comprising,

providing the voltage at the first value to the primary winding of the transformer for the first period of time, the providing the voltage for the first period of time including initiating delivery of the voltage at time $t_0$ and ceasing the delivery at time $t_1$, the ceasing the delivery inducing the flow of current through a secondary winding of the transformer and the secondary circuit;
measuring the first voltage at a first location in the secondary circuit at time $t_2$ and measuring the second voltage at the first location in the secondary circuit at time $t_3$;
computing the time constant of the secondary circuit using the difference between time $t_3$ and time $t_2$, the first measured voltage, and the second measured voltage;
computing the peak current in the secondary circuit using the value of the at least one resistor and the first measured voltage;
computing the intensity level at the resistive load using the computed peak current and the time constant of the secondary circuit;
monitoring the intensity level, the monitoring the intensity level including iteratively performing the providing a voltage at the first value to the primary winding for the first period of time, the measuring the first voltage and the second voltage, the computing the time constant, the computing the peak current, and the computing the intensity level.

5. The method of claim 4, wherein the method involves applying an electrical stimulus to the skin of an animal, the skin of the animal being the resistive load.

## Patentansprüche

1. Vorrichtung (1000), umfassend:

eine Mikrosteuerung (1002), die mit einem Transformator gekoppelt ist, wobei der Transformator eine Primärwicklung (1010) und eine Sekundärwicklung (1012) umfasst, wobei die Mikrosteuerung mit einem Sekundärstromkreis an einer ersten Stelle verbunden ist;
wobei:

die Mikrosteuerung dazu ausgelegt ist, über eine erste Zeitspanne hinweg eine Spannung (1006, $V_{control}$) mit einem ersten Wert für die Primärwicklung bereitzustellen, wobei das Bereitstellen der Spannung über die erste Zeitspanne hinweg das Initiieren der Zufuhr der Spannung zu einer Zeit to und das Beenden der Zufuhr zu einer Zeit $t_1$ umfasst, wobei das Beenden der Zufuhr einen Stromfluss ($I_{sec}$) durch die Sekundärwicklung und den Sekundärstromkreis induziert, wobei der Sekundärstromkreis zumindest einen Widerstand (1022, 1024), zumindest eine Diode (1070) und eine Widerstandslast (1050, $R_L$) umfasst, wobei die Widerstandslast variabel ist;
die Mikrosteuerung dazu ausgelegt ist, zu einer Zeit $t_2$ eine erste Spannung an der ersten Stelle im Sekundärstromkreis zu messen und zu einer Zeit $t_3$ eine zweite Spannung an der ersten Stelle zu messen;
die Mikrosteuerung dazu ausgelegt ist, einen Spitzenstrom an der ersten Stelle in dem Sekundärstromkreis unter Verwendung eines Werts des zumindest einen Widerstands und der ersten gemessenen Spannung zu berechnen;

**dadurch gekennzeichnet, dass**:

die Mikrosteuerung dazu ausgelegt ist, eine Zeitkonstante des Sekundärstromkreises unter Verwendung einer Differenz zwischen der Zeit $t_3$ und der Zeit $t_2$, der ersten gemessenen Spannung und der zweiten gemessenen Spannung zu berechnen; und
die Mikrosteuerung dazu ausgelegt ist, einen Intensitätspegel an der Widerstandslast unter Verwendung des berechneten Spitzenstroms und der Zeitkonstante des Sekundärstromkreises zu berechnen; und
die Mikrosteuerung dazu ausgelegt ist, den Intensitätspegel zu überwachen, wobei das Überwachen des Intensitätspegels das iterative Durchführen des Bereitstellens einer Spannung mit dem ersten Wert für die Primärwicklung über die erste Zeitspanne hinweg, das Messen der ersten Spannung und der zweiten Spannung, das Berechnen der Zeitkonstante, das Berechnen des Spitzenstroms und das Berechnen des Intensitätspegels umfasst.

2. Vorrichtung nach Anspruch 1, wobei das Überwachen des Intensitätspegels das Aufrechterhalten des Intensitätspegels auf einem nahezu konstanten Wert durch iteratives Anpassen von zumindest einem aus dem ersten Wert und der ersten Zeitspanne umfasst.

3. Vorrichtung nach Anspruch 1 oder 2, wobei die Vorrichtung dazu ausgelegt ist, einen elektrischen Stimulus an die Haut eines Tiers anzulegen, wobei die Haut des Tiers die Widerstandslast ist.

4. Verfahren, das mit einer Vorrichtung nach einem der Ansprüche 1 bis 3 durchgeführt wird, wobei das Verfahren Folgendes umfasst:

Bereitstellen der Spannung mit dem ersten Wert für die Primärwicklung des Transformators über die erste Zeitspanne hinweg, wobei das Bereitstellen der Spannung über die erste Zeitspanne hinweg das Initiieren der Zufuhr der Spannung zu einer Zeit to und das Beenden der Zufuhr zu einer Zeit $t_1$ umfasst, wobei das Beenden der Zufuhr einen Stromfluss durch eine Sekundärwicklung des Transformators und den Sekundärschaltkreis induziert;
Messen der ersten Spannung an einer ersten Stelle in dem Sekundärstromkreis zu einer Zeit $t_2$ und Messen der zweiten Spannung an der ersten Stelle im Sekundärstromkreis zu einer Zeit $t_3$;
Berechnen der Zeitkonstante des Sekundärstromkreises unter Verwendung der Differenz zwischen den Zeiten $t_3$ und $t_2$, der ersten gemessenen Spannung und der zweiten gemessenen Spannung;
Berechnen des Spitzenstroms im Sekundärstromkreis unter Verwendung des Werts des zumindest einen Widerstands und der ersten gemessenen Spannung;
Berechnen des Intensitätspegels an der Widerstandslast unter Verwendung des berechneten Spitzenstroms und der Zeitkonstante des Sekundärschaltkreises;
Überwachen des Intensitätspegels, wobei das Überwachen des Intensitätspegels das iterative Durchführen des Bereitstellens einer Spannung mit dem ersten Wert für die Primärwicklung über die erste Zeitspanne hinweg, das Messen der ersten Spannung und der zweiten Spannung, das Berechnen der Zeitkonstante, das Berechnen des Spitzenstroms und das Berechnen des Intensitätspegels umfasst.

5. Verfahren nach Anspruch 4, wobei das Verfahren das Anlegen eines elektrischen Stimulus an die Haut eines Tiers umfasst, wobei die Haut des Tiers die Widerstandslast ist.

## Revendications

1. Dispositif (1000), comprenant,
un microcontrôleur (1002) couplé à un transformateur, dans lequel le transformateur comprend un enroulement primaire (1010) et un enroulement secondaire (1012), dans lequel le microcontrôleur est connecté à un circuit secondaire au niveau d'un premier emplacement ; dans lequel :

le microcontrôleur est configuré pour fournir une tension (1006, $V_{control}$) à une première valeur à l'enroulement primaire pendant une première période de temps, la fourniture de la tension pendant la première période de temps comprenant le déclenchement de la fourniture de la tension à l'instant $t_0$ et la cessation de la fourniture à l'instant $t_1$, la cessation de la fourniture induisant un flux de courant ($I_{sec}$) à travers l'enroulement secondaire et le circuit secondaire, dans lequel le circuit secondaire comprend au moins une résistance (1022, 1024), au moins une diode (1070) et une charge résistive (1050, $R_L$), dans lequel la charge résistive est variable ;

le microcontrôleur est configuré pour mesurer une première tension au niveau du premier emplacement dans le circuit secondaire à un instant $t_2$ et pour mesurer une seconde tension au niveau du premier emplacement à un instant $t_3$ ;

le microcontrôleur est configuré pour calculer un courant de crête dans le circuit secondaire en utilisant une valeur de la au moins une résistance et de la première tension mesurée ; **caractérisé en ce que** :

le microcontrôleur est configuré pour calculer une constante de temps du circuit secondaire en utilisant une différence entre l'instant $t_3$ et l'instant $t_2$, la première tension mesurée et la seconde tension mesurée ; et

le microcontrôleur est configuré pour calculer un niveau d'intensité au niveau de la charge résistive en utilisant le courant de crête calculé et la constante de temps du circuit secondaire ; et

le microcontrôleur est configuré pour surveiller le niveau d'intensité, la surveillance du niveau d'intensité comprenant l'exécution itérative de la fourniture d'une tension à la première valeur à l'enroulement primaire pendant la première période de temps, la mesure de la première tension et de la seconde tension, le calcul de la constante de temps, le calcul du courant de crête et le calcul du niveau d'intensité.

2. Dispositif selon la revendication 1, la surveillance du niveau d'intensité comprenant le maintien du niveau d'intensité à une valeur presque constante en ajustant de manière itérative au moins l'une de la première valeur et de la première période de temps.

3. Dispositif selon la revendication 1 ou 2, dans lequel le dispositif est configuré pour appliquer un stimulus électrique au niveau de la peau d'un animal, la peau de l'animal étant la charge résistive.

4. Procédé exécuté sur le dispositif selon l'une quelconque des revendications 1 à 3, le procédé comprenant les étapes consistant à :

fournir la tension à la première valeur à l'enroulement primaire du transformateur pendant la première période de temps, la fourniture de la tension pendant la première période de temps comprenant le déclenchement de la fourniture de la tension à un instant $t_0$ et la cessation de la fourniture à un instant $t_1$, la cessation de la fourniture induisant la circulation de courant à travers un enroulement secondaire du transformateur et du circuit secondaire ;

mesurer la première tension au niveau d'un premier emplacement dans le circuit secondaire à un instant $t_2$ et mesurer la seconde tension au niveau du premier emplacement dans le circuit secondaire à un instant $t_3$ ;

calculer la constante de temps du circuit secondaire en utilisant la différence entre l'instant $t_3$ et l'instant $t_2$, la première tension mesurée et la seconde tension mesurée ;

calculer le courant de crête dans le circuit secondaire en utilisant la valeur de la au moins une résistance et la première tension mesurée ;

calculer le niveau d'intensité à la charge résistive en utilisant le courant de crête calculé et la constante de temps du circuit secondaire ;

surveiller le niveau d'intensité, la surveillance du niveau d'intensité comprenant l'exécution itérative de la fourniture d'une tension à la première valeur à l'enroulement primaire pendant la première période de temps, la mesure de la première tension et de la seconde tension, le calcul de la constante de temps, le calcul du courant de crête et le calcul du niveau d'intensité.

5. Procédé selon la revendication 4, dans lequel le procédé implique l'application d'un stimulus électrique au niveau de la peau d'un animal, la peau de l'animal étant la charge résistive.

FIG. 1

EP 3 723 478 B1

FIG. 2

EP 3 723 478 B1

FIG. 3

EP 3 723 478 B1

FIG. 4

FIG. 5

FIG. 6

FIG. 7

EP 3 723 478 B1

FIG. 8

EP 3 723 478 B1

FIG. 9

FIG. 10

$V_{control}$

$I_{pri}$

$I_{sec}$

$V_{measure}$

0   $t_1$

$t_2$   $t_3$

FIG. 11A

FIG. 11B

FIG. 11C

FIG. 11D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15839737 B
- US 15839749 B
- US 20080216766 A